(19) Europäisches Patentamt
European Patent Office
Office européen des brevets

(11) **EP 4 741 905 A1**

(12) **EUROPEAN PATENT APPLICATION**

(43) Date of publication:
**13.05.2026 Bulletin 2026/20**

(21) Application number: **24211107.8**

(22) Date of filing: **06.11.2024**

(51) International Patent Classification (IPC):
**G02B 21/06** (2006.01)     **G01B 9/04** (2006.01)
**G01B 11/25** (2006.01)     **G01B 21/04** (2006.01)

(52) Cooperative Patent Classification (CPC):
**G01B 9/04; G01B 11/25; G01B 21/045;
G02B 21/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Mitutoyo Corporation
Kawasaki-shi, Kanagawa 213-8533 (JP)**

(72) Inventors:
• **SEPKHANOV, Ruslan Akhmedovich
5643 EL EINDHOVEN (NL)**
• **KUMAR, Nitish
5508 MP VELDHOVEN (NL)**

(74) Representative: **EP&C
P.O. Box 3241
2280 GE Rijswijk (NL)**

(54) **METHOD AND DEVICE FOR DETERMINING A LOCAL HEIGHT OF A SAMPLE SURFACE**

(57) The current inventions relates to a method for determining a local height of a location on a sample surface. The invention further relates to a structured light microscope for determining a local height of a location on a sample surface. The invention further relates to a computer readable data carrier comprising a computer program that, when run on a processor of an structured light microscope according to the invention, causes the structured light microscope to perform the method according to the invention.

**Fig. 1**

EP 4 741 905 A1

## Description

The current inventions relates to a method for determining a local height of a location on a sample surface. The invention further relates to a structured light microscope for determining a local height of a location on a sample surface. The invention further relates to a computer readable data carrier comprising a computer program that, when run on a processor of an structured light microscope according to the invention, causes the structured light microscope to perform the method according to the invention.

A structured light microscope may project an optical pattern onto a sample surface and measure a contrast thereof at a location of the sample surface when the sample surface is at different measurement positions relative to the microscope along an optical axis thereof to obtain a contrast through-focus relation. A maximum of the contrast through-focus relation may be associated to a local height of the location of the sample surface. A height map of the sample surface may be obtained by performing these measurements for multiple locations of the sample surface.

Optical systems are subject to aberrations. Aberrations may be defined as deviations of the wavefront from an ideal shape. In a structured light microscope, aberrations may distort the image in lateral directions, e.g. perpendicular to the optical axis, the aberrations may also distort a shape of the obtained contrast through-focus relation which may displace its maximum. Thus, aberrations lead to measurement errors in the height measurements.

Generally, the effect of the aberrations may be minimized by using multiple optical surfaces. In the case of structured light microscope, minimizing the effect of the aberrations is complex because the sample has a three-dimensional shape. The way the sample reflects the optical pattern depends on the shape of the sample and affects the height measurement via the aberrations of the system. For example, this may result in obtaining a non-flat height map for a flat sample surface.

It is an object of the invention to provide a method for reducing the effect of aberrations on a height map obtained by a structured light microscope.

The object of the invention is achieved by the method according to claim 1.

The method of the invention allows for determining a local height of a location on a sample surface. The local height may be a relative local height, e.g. with respect to another location on the sample surface, e.g. a baseline point. By collecting multiple local heights of multiple locations on the sample surface a height map of the sample surface may be obtained. For each location on the sample surface, the associated local height may be obtained using the method of the invention.

The location of the sample surface may also be called a sample surface location herein. The sample surface location may be associated with a pixel or a group of pixels of the structured light microscope.

The sample surface may be a surface of a semiconductor or an optical element. The sample surface may be a product obtained from a production process. The method of the invention may be used in a quality control of the production process.

The method comprises projecting an optical pattern on the sample surface and moving the sample surface relative to a structured light microscope between multiple measurement positions along an optical axis of the structured light microscope. The structured light microscope may comprise a projector for projecting the optical pattern and an optical sensor to measure a light reflected of the sample surface.

The sample surface may be held in a sample holder during measurement. The sample surface may be moved between the multiple measurement positions. The structured light microscope, or a portion thereof such as the optical sensor or a lens of the optical sensor, may be moved relative to the sample surface between the different measurement positions. An effective distance between the sample surface and the optical sensor may be different in the different measurement positions. Since the measured contrast or focus of the optical pattern projected on the sample surface depends on the effective distance, the measured contrast may be different between the different measurement positions. A maximum contrast, i.e. when the optical pattern is in focus, of the optical pattern may be related to a height of the sample surface.

The method comprises obtaining a contrast through-focus relation associated with the sample surface location by measuring the contrast of the optical pattern on the location at each of the measurement positions. The contrast through-focus relation may relate the effective distance to the measured contrast. The contrast through-focus relation may be a list of data points, wherein each data point comprises an effective distance and an associated contrast. The contrast through-focus relation may also be an interpolated relation based on the measured contrasts. For example, the contrast through-focus relation may be a curve based on the measurements.

A local tilt angle of the sample surface location, i.e. the location of the sample surface, is determined based on comparing the obtained contrast through-focus relation to multiple calibrated contrast through-focus relations and selecting one of the calibrated contrast through-focus relations based on the comparison, wherein each of the calibrated contrast through-focus relations is associated with a tilt angle.

The local tilt angle may be a local deviation of the local orientation of the sample surface with respect to a horizontal, e.g. the local tilt angle may be a local slope, wherein the local tilt angle is associated with the sample surface location. The local tilt angle may be expressed in cartesian, polar and/or azimuthal coordinates. The local tilt angle may be expressed as a vector, e.g. having an x-component and a y-component.

For example, the tilt angles may be incremental tilt angles from -10° to +10° in both x-direction and y-direction. For each set of tilt angles, for example a set being x-direction angle is 5° and y-direction angle is 0°, an associated calibrated contrast through-focus relation is known.

The calibrated contrast through-focus relations are each associated with a tilt angle. The calibrated contrast through-focus relations and associated tilt angles may be provided in a calibration table associated with the structured light microscope. The calibrated contrast through-focus relations and associated tilt angles may be obtained as disclosed herein. In other embodiments, the calibrated contrast through-focus relations and tilt angles may be obtained from a calibration table.

The determined local tilt angle may be equal to the tilt angle associated with the selected calibrated contrast through-focus relation or the determined local tilt angle may be based, e.g. derived from, the tilt angle associated with he selected calibrated contrast through-focus relation. For example, in embodiments of this disclose the local tilt angle may be based on a weighted average of tilt angles associated with calibrated contrast through-focus relations.

The selected calibrated contrast through-focus relation may be selected based on being most similar, e.g. using a measure such as a correlation, to the obtained contrast through-focus relation.

The method further comprises obtaining a height correction for the location based on the obtained local tilt angle. For example, each calibrated contrast through-focus relation and associated tilt angle may further be associated with a height correction, which associated height correction may be the one obtained. In such embodiments, the calibrated contrast through-focus relations, associated tilt angles, and associated height corrections may be contained in a calibration table. The calibrated contrast through-focus relations, associated tilt angles, and associated height corrections may be obtained as disclosed herein. In other embodiments, the calibrated contrast through-focus relations, associated tilt angles, and associated height corrections may be provided in combination with the structured light microscope used in the method. The calibrated contrast through-focus relations, associated tilt angles, and associated height corrections may be specific for the used structured light microscope, or specific for the type of used structured light microscope.

The method comprises obtaining the local height by determining an in-focus position of the optical pattern along the optical axis, e.g. a position along the optical axis wherein the contrast of the optical pattern is highest, e.g. maximal, and correcting the so-obtained height wit the height correction to obtain the local height, for example by adding or subtracting the height correction from the so-obtained height.

The method of the invention allows to correct the obtained height for errors due to aberrations in the structured light microscope. The inventors realized that it is not enough to measure a flat surface to obtain an inaccuracy and correct every measured height with this obtained inaccuracy because the actual inaccuracy in the height measurement depends on the local tilt angle of the sample surface. Importantly, the local tilt angles may not be obtained directly from the sample surface because the shape thereof is not measured. Thus, the local tilt angles are obtained by comparing the contrast through-focus relation to the calibrated contrast through-focus relations. The method comprises first determining the local tilt angle and second correcting the measured height with a height correction associated with the local tilt angle, e.g. the height correction depends on the local tilt angle.

In embodiments, the multiple calibrated contrast through-focus relations, associated tilt angles and associated height corrections are obtained by:

- measuring, with the structured light microscope at each of the multiple measurement positions, a contrast of an optical pattern on a flat test surface having a known height to obtain the multiple calibrated contrast through-focus relations, wherein different calibrated contrast through-focus relations are obtained by positioning the test surface at different tilt angles relative to the optical axis;
- obtaining, for each of the calibrated contrast through-focus relation, the associated height correction by determining the height of the flat test surface based on the associated calibrated contrast through-focus relation and calculating the difference of the known height of the flat test surface from the determined height; and
- storing the calibrated contrast through-focus relations, associated tilt angles and associated height corrections.

The flat test surface may be obtained using an expensive and/or laborious process not suitable for producing the sample surfaces whose local height may be determined. Because the flat surface has a known height, the difference between the measured height and known height is the error of the measurement, which may be used as the height correction. By storing the obtained height correction, contrast through-focus relation, and associated tilt angle the calibrated contrast through-focus relations, associated tilt angles and associated height corrections may be obtained by performing the steps for different tilt angles.

For example, the flat surface may be tilted at angles of 0°, 1°, 2°, ... , 45° in perpendicular directions to obtain the different calibrated contrast through-focus relations.

In embodiments, the multiple calibrated contrast through-focus relations, associated tilt angles and associated height corrections are obtained by:

- measuring, with the structured light microscope at each of the multiple measurement positions, a contrast of an optical pattern on a test surface having a known three-dimensional shape with a known height profile to obtain the multiple calibrated contrast through-focus relations, wherein different calibrated contrast through-focus relations are obtained by positioning the test surface at different lateral positions relative to the optical axis;
- obtaining, for each of the calibrated contrast through-focus relation, the associated height correction by determining the height of the flat test surface based on the associated calibrated contrast through-focus relation and calculating the difference of the height of the test surface from the determined height; and
- storing the calibrated contrast through-focus relations, associated tilt angles and associated height corrections.

For example, the test surface having a known three-dimensional shape with a known height profile may be a test surface having a dome shaped element located thereon. This allows to obtain the calibrated contrast through-focus relations for different tilt angles by moving the test surface laterally with respect to the optical axis.

The above two embodiments are examples of how to perform reference, or calibration, measurements to obtain the calibrated contrast through-focus relation with the associated tilt angles and height corrections. The reference measurements may have to be performed once for a structured light microscope. If two or more structured light microscopes are sufficiently similar, or if quality standards allow, one of the structured light microscopes may be used to obtain the reference measurements for both, or all, of the structured light microscopes according to the embodiments above.

In embodiments, the step of comparing the obtained contrast through-focus relation to multiple calibrated contrast through-focus relations and selecting one of the calibrated contrast through-focus relations based on the comparison comprises determining a similarity between the obtained contrast through-focus relation and each of the multiple calibrated contrast through-focus relations and selecting one of the calibrated contrast through-focus relations based on the determined similarity, e.g. wherein the similarity is a correlation, e.g. wherein the selected calibrated contrast through-focus relation is selected based on having the highest similarity of the calibrated contrast through-focus relations.

For example, the similarity between the obtained contrast through-focus relation and the calibrated contrast through-focus relations may be based on one or more of:

- comparing features of contras through-focus curves representing the contrast through-focus relations, such as:

  ◦ width of the curves, for example full width half maximum;
  ◦ location of one or more of the extrema, such as a location of first minima or maxima to the left and right of the global maximum;
  ◦ value of the curves at one or more of the extrema, such as the value of the first minima to the left and right of the global maximum;
  ◦ width of the first side-lobes on the right and/or left from the main lobe, e.g. the lobe comprising the global maximum;
  ◦ the value of the global maximum;

- an artificial neural network trained for comparing the contrast through-focus relations; and

- a cross-correlation between the contrast through-focus relations, e.g. a cross-correlation between the contrast through-focus relations excluding the main-lobe.

In embodiments, the similarity between the obtained contrast through-focus relation and the multiple calibrated contrast through-focus relations is based on contrast through-focus curves that are associated with the respective contrast through-focus relations, e.g. by comparing a location of extrema thereof, or by comparing a size and/or shape thereof.

In embodiments, the step of determining the local tilt angle of the sample surface at the location comprises calculating a weighted average of a first tilt angle associated with the calibrated contrast through-focus relation having the highest similarity with the obtained contrast through-focus relation and a second tilt angle, wherein the second tilt angle is neighbouring the first tilt angle and is associated with the calibrated contrast through-focus relation having the second highest similarity of calibrated contrast through-focus relations associated with tilt angles neighbouring the first tilt angle, wherein the weights of the weighted average are based on the determined similarities.

For example, the tilt angles associated with the calibrated contrast through-focus relations may be ordered, e.g. in a matrix wherein a change in an x-component of the angle happens in the columns and a change in a y-component of the angle happens in the rows of the matrix. For example, in a 1-dimensional example, the tilt angles may be 0°, 1°, 2°, 3°, 4°. The angles 2° and 4° may be said to neighbour 3°, whereas 0° and 1° do not.

Thus, one calibrated contrast through-focus relation may be selected based on having the highest similarity with the obtained contrast through-focus relation, the associated tilt angle is the first tilt angle. The neighboring tilt angles of the first tilt angle are selected and the similarity of the associated calibrated contrast through-focus relations with the obtained contrast through-focus relation is determined. The second tilt angle is associated with the calibrated contrast through-focus relation having the highest similarity of those considered.

For example, the local tilt angle may be obtained by:

$$A_m = \frac{s_1 A_1 + s_2 A_2}{s_1 + s_2}$$

wherein $s_1$ is the similarity between the calibrated contrast through-focus relation associated with the first tilt angle, $A_1$ is the first tilt angle, $s_2$ is the similarity of the calibrated contrast through-focus relation associated with the second tilt angle and $A_2$ is the second tilt angle.

In embodiments, the step of determining the height correction comprises calculating a weighted average of the height corrections associated with the first and second tilt angles, wherein the weights of the weighted average are based on the determined similarities. For example, a formula similar to the formula given above may be used to determine the height correction.

The invention further relates to a structured light microscope for determining a local height of a location on a sample surface comprising:

- a projector for projecting an optical pattern on the sample surface;
- an optical sensor for obtaining a contrast of the optical pattern projected on the sample surface;
- a sample holder for holding the sample surface at different measurement positions relative to the optical sensor along an optical axis of the structured light microscope; and
- a processor functionally connected to the optical sensor, sample holder and projector,

wherein the processor is configured for:

- obtaining a contrast through-focus relation associated with the location of the sample surface based on a contrast, measured by the optical sensor at each of the multiple measurement positions, of the optical pattern, projected on the sample surface by the projector;
- determining a local tilt angle of the sample surface at the location based on comparing the obtained contrast through-focus relation to multiple calibrated contrast through-focus relations and selecting one of the calibrated contrast through-focus relations based on the comparison, wherein each of the calibrated contrast through-focus relations is associated with a tilt angle;
- obtaining a height correction for the location based on the obtained local tilt angle;
- obtaining the local height by determining an in-focus position of the optical pattern along the optical axis and correcting with the height correction.

In this way, the structured light microscope may be used to perform the method of the invention.

In embodiments, the structured light microscope is configured for obtaining the multiple calibrated contrast through-focus relations, associated tilt angles, and associated height corrections by:

- measuring, with the with the optical sensor at each of the multiple measurement positions, a contrast of an optical pattern on a flat test surface having a known height to obtain the multiple calibrated contrast through-focus relations, wherein different calibrated contrast through-focus relations are obtained by positioning the test surface at different tilt angles relative to the optical axis with the sample holder;
- obtaining, by the processor and for each of the calibrated contrast through-focus relation, the associated height correction by determining the height of the flat test surface based on the associated calibrated contrast through-focus relation and calculating the difference of the known height of the flat test surface from the determined height; and
- storing, by the processor, the calibrated contrast through-focus relations, associated tilt angles and associated height corrections.

In embodiments, the structured light microscope is configured for obtaining the multiple calibrated contrast through-focus relations, associated tilt angles, and associated height corrections by:

- measuring, with the optical sensor at each of the multiple measurement positions, a contrast of an optical pattern on a test surface having a known three-dimensional shape with a known height profile to obtain the multiple calibrated contrast through-focus relations, wherein different calibrated contrast through-focus relations are obtained by positioning, with the sample holder, the test surface at different lateral positions relative to the optical axis;
- obtaining, by the processor and for each of the calibrated contrast through-focus relation, the associated height correction by determining the height of the flat test surface based on the associated calibrated contrast through-focus relation and calculating the difference of the height of the test surface from the determined height; and
- storing, by the processor, the calibrated contrast through-focus relations, associated tilt angles and associated height corrections.

In embodiments, the processor is further configured for comparing the obtained contrast through-focus relation to multiple calibrated contrast through-focus relations and selecting one of the calibrated contrast through-focus relations based on the comparison comprises determining a similarity between the obtained contrast through-focus relation and each of the multiple calibrated contrast through-focus relations and selecting one of the calibrated contrast through-focus relations based on the determined similarity, e.g. wherein the similarity is a correlation.

In embodiments, the processor is configured for basing the similarity between the obtained contrast through-focus relation and the multiple calibrated contrast through-focus relations on contrast through-focus curves that are associated with the respective contrast through-focus relations, e.g. by comparing a location of extrema thereof, or by comparing a size and/or shape thereof.

In embodiments, the processor is further configured for determining the local tilt angle of the sample surface at the location by calculating a weighted average of a first tilt angle associated with the calibrated contrast through-focus relation having the highest similarity with the obtained contrast through-focus relation and a second tilt angle, wherein the second tilt angle is neighbouring the first tilt angle and is associated with the calibrated contrast through-focus relation having the second highest similarity of calibrated contrast through-focus relations associated with tilt angles neighbouring the first tilt angle, wherein the weights of the weighted average are based on the determined similarities.

In embodiments, the processor is further configured for determining the height correction by calculating a weighted average of the height corrections associated with the first and second tilt angles, wherein the weights of the weighted average are based on the determined similarities.

The invention further relates to a computer readable data carrier comprising a computer program that, when run on a processor of an structured light microscope according to the invention, causes the structured light microscope to perform the method according to the invention.

Embodiments of the invention will now be described, by way of example only, with reference to the accompanying drawings in which corresponding reference symbols indicate corresponding parts, in which:

- Figure 1 depicts three contrast-through focus curves associated with different tilt angles;
- Figure 2 depicts a method for obtaining calibrated contrast through-focus relations with the associated tilt angles and height corrections; and
- Figure 3 depicts a structured light microscope.

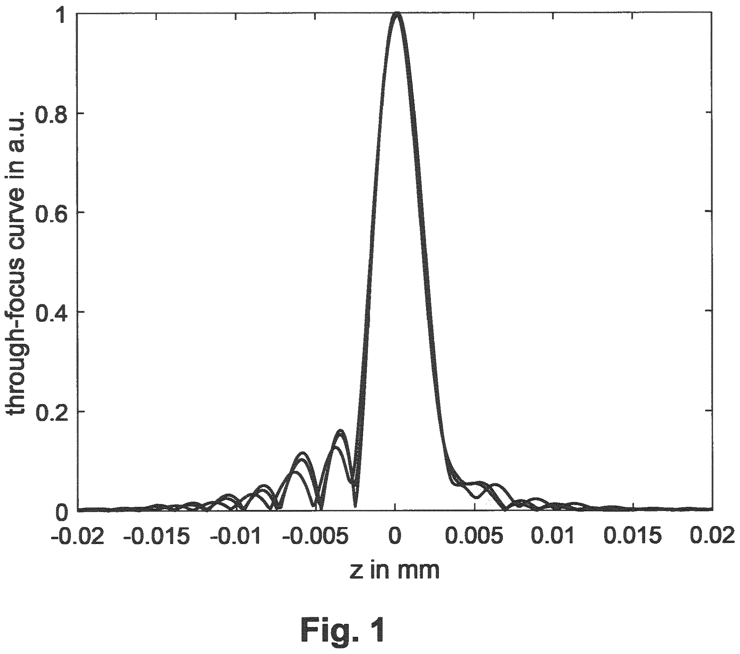

Figure 1 depicts three different contrast-through focus curves that are associated with three different local tilt angles. The local tilt angles are 0°, 1.25° and 2.5° in an x-direction. The x-axis of the figure represents a position along the optical axis of the structured light microscope. The y-axis of the figure represents the contrast in arbitrary units, such that a maximum contrast is normalized to one.

As may be seen in figure 1, the shape of the curves, and the location of the extrema, depend on the local tilt angle of the sample. Thus, the shape of the contrast through-focus relations may be used to determine the associated tilt angle.

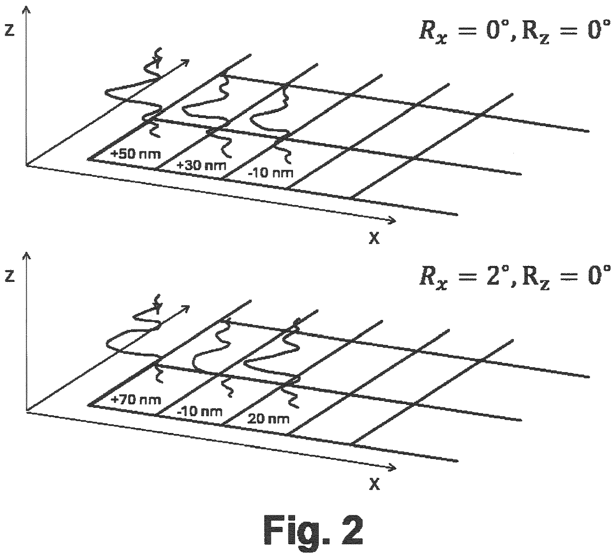

Figure 2 depicts a method for obtaining calibrated contrast through-focus relations with the associated tilt angles and height corrections. The figure shows two three-dimensional graphs with squares in the x-y plane that represent different locations on a flat test surface. The method of the invention may be performed for each location. As may be seen, the upper graph represents a test surface with a tilt angle of (0°, 0°) and the lower graph represents the test surface with a tilt angle of (2°, 0°).

Each square has an associated contrast through-focus relation shown and a determined height correction. As may be seen by comparing the upper graph to the lower graph, both the contrast through-focus relation and the associated height correction of a location depend on the tilt angle. For example, for the left square, representing a location, the height correction is 50nm when the tilt angle is (0°, 0°) and the height correction is 70nm when the tilt angle is (2°, 0°).

The calibrated contrast through-focus relations may be obtained, in principle for each location, by measuring the contrast through-focus relation and determining the height correction for different tilt angles of the flat test surface.

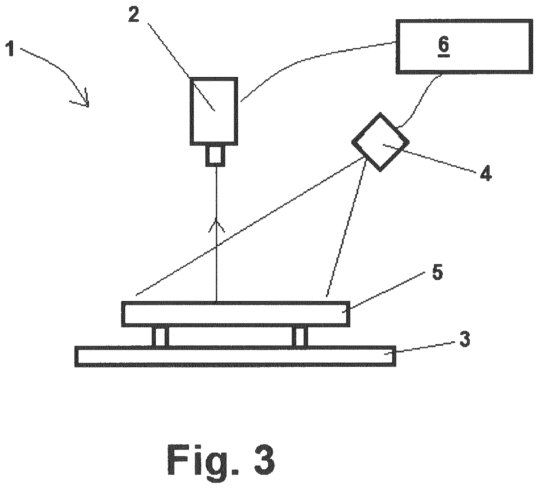

Figure 3 depicts a structured light microscope 1 comprising an optical sensor 2, a sample holder 3 holding a sample surface 5, a projector 4 and a processor 6. The optical sensor 2 is configured for obtaining a contrast of an optical pattern projected on the sample surface 3 by the projector 4.

The sample holder 3 is configured for holding the sample surface 3 at different measurement positions relative to the optical sensor 2 along an optical axis of the structured light microscope 1. The sample holder 3 may be moveable relative to the optical sensor 2, or the optical sensor 2, or a portion thereof such as a lens, may be moveable relative to the sample holder 3 such that the effective distance between the sample surface 5 and the optical sensor 2 may be changed.

The processor 6 is functionally connected to the optical sensor 2, the sample holder 3 and the projector 4, such that the processor may:

- obtain a contrast through-focus relation associated with the location of the sample surface 5 based on a contrast, measured by the optical sensor at each of the multiple measurement positions, of the optical pattern, projected on the sample surface by the projector 4;
- determine a local tilt angle of the sample surface 5 at the location based on comparing the obtained contrast through-focus relation to multiple calibrated contrast through-focus relations and selecting one of the calibrated contrast through-focus relations based on the comparison, wherein each of the calibrated contrast through-focus relations is associated with a tilt angle;

- obtaining a height correction for the location based on the obtained local tilt angle;
- obtaining the local height by determining an in-focus position of the optical pattern along the optical axis and correcting with the height correction.

The invention as disclosed herein allows to reduce the effect of aberrations on a height map, or a local height, obtained by a structured light microscope 1.

## Claims

1. Method for determining a local height of a location on a sample surface, wherein the method comprises:

   - projecting an optical pattern on the sample surface;
   - moving the sample surface relative to a structured light microscope between multiple measurement positions along an optical axis of the structured light microscope;
   - obtaining a contrast through-focus relation associated with the location of the sample surface by measuring a contrast of the optical pattern on the location at each of the multiple measurement positions;
   - determining a local tilt angle of the sample surface at the location based on comparing the obtained contrast through-focus relation to multiple calibrated contrast through-focus relations and selecting one of the calibrated contrast through-focus relations based on the comparison, wherein each of the calibrated contrast through-focus relations is associated with a tilt angle;
   - obtaining a height correction for the location based on the obtained local tilt angle;
   - obtaining the local height by determining an in-focus position of the optical pattern along the optical axis and correcting with the height correction.

2. Method according to claim 1, wherein the multiple calibrated contrast through-focus relations, associated tilt angles and associated height corrections are obtained by:

   - measuring, with the structured light microscope at each of the multiple measurement positions, a contrast of an optical pattern on a flat test surface having a known height to obtain the multiple calibrated contrast through-focus relations, wherein different calibrated contrast through-focus relations are obtained by positioning the test surface at different tilt angles relative to the optical axis;
   - obtaining, for each of the calibrated contrast through-focus relation, the associated height correction by determining the height of the flat test surface based on the associated calibrated contrast through-focus relation and calculating the difference of the known height of the flat test surface from the determined height; and
   - storing the calibrated contrast through-focus relations, associated tilt angles and associated height corrections.

3. Method according to claim 1, wherein the multiple calibrated contrast through-focus relations, associated tilt angles and associated height corrections are obtained by:

   - measuring, with the structured light microscope at each of the multiple measurement positions, a contrast of an optical pattern on a test surface having a known three-dimensional shape with a known height profile to obtain the multiple calibrated contrast through-focus relations, wherein different calibrated contrast through-focus relations are obtained by positioning the test surface at different lateral positions relative to the optical axis;
   - obtaining, for each of the calibrated contrast through-focus relation, the associated height correction by determining the height of the flat test surface based on the associated calibrated contrast through-focus relation and calculating the difference of the height of the test surface from the determined height; and
   - storing the calibrated contrast through-focus relations, associated tilt angles and associated height corrections.

4. Method according to one or more of the preceding claims, wherein the step of comparing the obtained contrast through-focus relation to multiple calibrated contrast through-focus relations and selecting one of the calibrated contrast through-focus relations based on the comparison comprises determining a similarity between the obtained contrast through-focus relation and each of the multiple calibrated contrast through-focus relations and selecting one of the calibrated contrast through-focus relations based on the determined similarity, e.g. wherein the similarity is a correlation.

5. Method according to claim 4, wherein the similarity between the obtained contrast through-focus relation and the multiple calibrated contrast through-focus relations is based on contrast through-focus curves that are associated with the respective contrast through-focus relations, e.g. by comparing a location of extrema thereof, or by comparing a size and/or shape thereof.

6. Method according to one or more of claims 4 and 5, wherein the step of determining the local tilt angle of the sample surface at the location comprises calculating a weighted average of a first tilt angle associated with the calibrated contrast through-focus relation having the highest similarity with the obtained contrast through-focus relation and a second tilt angle, wherein the second tilt angle is neighbouring the first tilt angle and is associated with the calibrated contrast through-focus relation having the second highest similarity of calibrated contrast through-focus relations associated with tilt angles neighbouring the first tilt angle, wherein the weights of the weighted average are based on the determined similarities.

7. Method according to claim 6, wherein the step of determining the height correction comprises calculating a weighted average of the height corrections associated with the first and second tilt angles, wherein the weights of the weighted average are based on the determined similarities.

8. Structured light microscope for determining a local height of a location on a sample surface comprising:

   - a projector for projecting an optical pattern on the sample surface;
   - an optical sensor for obtaining a contrast of the optical pattern projected on the sample surface;
   - a sample holder for holding the sample surface at different measurement positions relative to the optical sensor along an optical axis of the structured light microscope; and
   - a processor functionally connected to the optical sensor, sample holder and projector,

   wherein the processor is configured for:

   - obtaining a contrast through-focus relation associated with the location of the sample surface based on a contrast, measured by the optical sensor at each of the multiple measurement positions, of the optical pattern, projected on the sample surface by the projector;
   - determining a local tilt angle of the sample surface at the location based on comparing the obtained contrast through-focus relation to multiple calibrated contrast through-focus relations and selecting one of the calibrated contrast through-focus relations based on the comparison, wherein each of the calibrated contrast through-focus relations is associated with a tilt angle;
   - obtaining a height correction for the location based on the obtained local tilt angle;
   - obtaining the local height by determining an in-focus position of the optical pattern along the optical axis and correcting with the height correction.

9. Structured light microscope according to claim 8, wherein the structured light microscope is configured for obtaining the multiple calibrated contrast through-focus relations, associated tilt angles, and associated height corrections by:

   - measuring, with the with the optical sensor at each of the multiple measurement positions, a contrast of an optical pattern on a flat test surface having a known height to obtain the multiple calibrated contrast through-focus relations, wherein different calibrated contrast through-focus relations are obtained by positioning the test surface at different tilt angles relative to the optical axis with the sample holder;
   - obtaining, by the processor and for each of the calibrated contrast through-focus relation, the associated height correction by determining the height of the flat test surface based on the associated calibrated contrast through-focus relation and calculating the difference of the known height of the flat test surface from the determined height; and
   - storing, by the processor, the calibrated contrast through-focus relations, associated tilt angles and associated height corrections.

10. Structured light microscope according to claim 8, wherein the structured light microscope is configured for obtaining the multiple calibrated contrast through-focus relations, associated tilt angles, and associated height corrections by:

   - measuring, with the optical sensor at each of the multiple measurement positions, a contrast of an optical pattern on a test surface having a known three-dimensional shape with a known height profile to obtain the multiple calibrated contrast through-focus relations, wherein different calibrated contrast through-focus relations are obtained by positioning, with the sample holder, the test surface at different lateral positions relative to the optical axis;
   - obtaining, by the processor and for each of the calibrated contrast through-focus relation, the associated height correction by determining the height of the flat test surface based on the associated calibrated contrast through-focus relation and calculating the difference of the height of the test surface from the determined height; and
   - storing, by the processor, the calibrated contrast through-focus relations, associated tilt angles and associated height corrections.

11. Structured light microscope according to one or more of the claims 8 - 10, wherein the processor is further configured for comparing the obtained contrast through-focus relation to multiple calibrated contrast through-focus relations and selecting one of the calibrated contrast through-focus relations based on the comparison comprises determining a similarity between the obtained contrast through-focus relation and each of the multiple calibrated contrast through-focus relations and selecting one of the calibrated contrast through-focus relations based on the determined similarity, e.g. wherein the similarity is a correlation.

12. Structured light microscope according to claim 11, wherein the processor is configured for basing the similarity between the obtained contrast through-focus relation and the multiple calibrated contrast through-focus relations on contrast through-focus curves that are associated with the respective contrast through-focus relations, e.g. by comparing a location of extrema thereof, or by comparing a size and/or shape thereof.

13. Structured light microscope according to one or more of claims 11 and 12, wherein the processor is further configured for determining the local tilt angle of the sample surface at the location by calculating a weighted average of a first tilt angle associated with the calibrated contrast through-focus relation having the highest similarity with the obtained contrast through-focus relation and a second tilt angle, wherein the second tilt angle is neighbouring the first tilt angle and is associated with the calibrated contrast through-focus relation having the second highest similarity of calibrated contrast through-focus relations associated with tilt angles neighbouring the first tilt angle, wherein the weights of the weighted average are based on the determined similarities.

14. Structured light microscope according to one or more of claims 11 - 13, wherein the processor is further configured for determining the height correction by calculating a weighted average of the height corrections associated with the first and second tilt angles, wherein the weights of the weighted average are based on the determined similarities.

15. Computer readable data carrier comprising a computer program that, when run on a processor of an structured light microscope according to one or more of the claims 8 - 14, causes the structured light microscope to perform the method according to one or more of the claims 1-7.

through-focus curve in a.u.

z in mm

Fig. 1

Fig. 2

Fig. 3

Europäisches
Patentamt
European
Patent Office
Office européen
des brevets

**EUROPEAN SEARCH REPORT**

Application Number

EP 24 21 1107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/219441 A1 (HAITJEMA HAN [NL] ET AL) 6 August 2015 (2015-08-06) * paragraph [0009] - paragraph [0119] * * figures 1, 2, 6, 7 * ----- | 1-15 | INV. G02B21/06 G01B9/04 G01B11/25 G01B21/04 |
| A | US 2020/141722 A1 (KÖRNER KLAUS [DE]) 7 May 2020 (2020-05-07) * the whole document * ----- | 1-15 | |

**TECHNICAL FIELDS SEARCHED (IPC)**

G02B
G01B

The present search report has been drawn up for all claims

| Place of search | Date of completion of the search | Examiner |
|---|---|---|
| Munich | 4 April 2025 | Kokkonen, Jukka |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................
& : member of the same patent family, corresponding
    document

EPO FORM 1503 03.82 (P04C01)

# EP 4 741 905 A1

## ANNEX TO THE EUROPEAN SEARCH REPORT
## ON EUROPEAN PATENT APPLICATION NO.

EP 24 21 1107

04-04-2025

| Patent document cited in search report | Publication date | Patent family member(s) | Publication date |
|---|---|---|---|
| US 2015219441 A1 | 06-08-2015 | CN 104833311 A | 12-08-2015 |
| | | EP 2905575 A1 | 12-08-2015 |
| | | JP 6502113 B2 | 17-04-2019 |
| | | JP 2015148614 A | 20-08-2015 |
| | | US 2015219441 A1 | 06-08-2015 |
| US 2020141722 A1 | 07-05-2020 | DE 102017004428 A1 | 08-11-2018 |
| | | US 2020141722 A1 | 07-05-2020 |
| | | WO 2018206233 A1 | 15-11-2018 |

EPO FORM P0459